# EUROPÄISCHE PATENTSCHRIFT

(11) **EP 4 442 937 B1**
(45) Veröffentlichungstag und Bekanntmachung des Hinweises auf die Patenterteilung: **22.04.2026**
(21) Anmeldenummer: 24156825.2
(22) Anmeldetag: 09.02.2024
(51) Int. Cl.: E04H 17/16, F16P 1/02

(54) **MASCHINENSCHUTZZAUN**
MACHINE PROTECTION FENCE
CLÔTURE DE PROTECTION POUR MACHINE

(30) Priorität: 09.02.2023 DE 102023103142
(43) Veröffentlichungstag der Anmeldung: 09.10.2024
(73) Patentinhaber: Brühl Safety GmbH, 57250 Netphen (DE)
(72) Erfinder: Fitz, Martin, 9434 Au (SG) (CH)
(74) Vertreter: Dr. Weitzel & Partner

(56) Entgegenhaltungen:
- WO-A1-2015/070285
- DE-A1- 102019 202 313
- DE-A1- 102019 202 316
- DE-U1- 202014 000 889

## Beschreibung

Die vorliegende Erfindung betrifft einen Maschinenschutzzaun gemäß dem Oberbegriff von Anspruch 1.

Bei gattungsgemäßen Schutzzäunen, wie sie beispielsweise in DE 10 2019 202 313 A1 offenbart werden, werden vorgefertigte Zaunfelder vorbestimmter Größe mit Befestigungslaschen am Pfosten befestigt. Wichtig ist dabei ein elektrischer Potenzialausgleich, da mit solchen Maschinenschutzzäunen Anlagen im Industriebereich, beispielsweise Roboter, wie Schweißroboter, oder andere Maschinen eingezäunt werden, sodass die Gefahr besteht, dass sich die Sicherheitszaunfelder elektrisch aufladen. Wenn nun eine Person das Sicherheitszaunfeld berührt, so kann sie dadurch einem elektrischen Stromschlag ausgesetzt werden. Um dies zu vermeiden, werden die Zaunfelder in der Praxis geerdet, beispielsweise mit einem Erdungskabel, oder auch, wie in DE 10 2019 202 313 A1 vorgeschlagen wird, mit einer besonders gestalteten Befestigungslasche zur Befestigung des Zaunfeldes am Pfosten.

Ein weiterer gattungsgemäßer Maschinenschutzzaun, bei welchem das Zaunfeld über eine besondere Verschraubung mit den Pfosten elektrisch geerdet wird, wird in DE 10 2019 202 316 A1 offenbart.

Aufgrund des Aufbaus der Zaunfelder passen diese bei den beiden zuvor genannten Maschinenschutzzäunen nur zwischen Pfosten, die eine vorbestimmte Höhe und einen vorbestimmten Abstand zueinander aufweisen. Bei einer Änderung des Abstands zwischen den Pfosten muss ein anderes Zaunfeld nach Maß hergestellt werden, da eine flexible Anpassung seiner Länge nicht möglich ist. Um dies zu vermeiden, schlägt DE 10 2021 210 759 A1 vor, ein Schutzzaunsystem mit Zaunfeldern auszustatten, die jeweils einen Zaunfeldrahmen aufweisen, der Vertikalstreben und Horizontalstreben umfasst, wobei die Vertikalstreben und die Horizontalstreben jeweils durch ein Profilrohr gebildet werden, das wenigstens eine sich an einer Oberfläche vom ersten Ende bis zum zweiten Ende erstreckende Nut aufweist, wobei eine Vielzahl von Konterelementen jeweils unter Ausbildung einer Hinterschneidung in den Nuten angeordnet ist und die Vertikalstreben und Horizontalstreben durch Zaunfeldverbindungsstücke aneinander montiert sind, wobei die Zaunfeldverbindungsstücke jeweils an wenigstens einem Konterelement einer Vertikalstrebe und/oder wenigstens einem Konterelement einer Horizontalstrebe verschraubt sind. Damit ist eine Längenänderung der Zaunfelder auch bei der Montage der Zaunfelder vor Ort möglich.

Der vorliegenden Erfindung liegt die Aufgabe zugrunde, einen Maschinenschutzzaun anzugeben, bei welchem die Länge der einzelnen Zaunfelder besonders leicht anpassbar ist, die Montage der Zaunfelder an den Pfosten weiter vereinfacht wird und der Maschinenschutzzaun eine besonders sichere Abschirmung des eingezäunten Bereichs ermöglicht.

Die erfindungsgemäße Aufgabe wird durch einen Maschinenschutzzaun mit den Merkmalen von Anspruch 1 gelöst. Die abhängigen Ansprüche beschreiben vorteilhafte und besonders zweckmäßige Ausgestaltungen der Erfindung.

Ein erfindungsgemäßer Maschinenschutzzaun weist wenigstens ein Zaunfeld, in der Regel eine Vielzahl von horizontal nebeneinander positionierten Zaunfeldern, auf, sowie wenigstens zwei das wenigstens einen Zaunfeld tragende Pfosten. Wenn mehrere Zaunfelder horizontal nebeneinander vorgesehen sind, so ist jeweils zwischen zwei Pfosten ein Zaunfeld angeordnet.

Das Zaunfeld ist aus Blech hergestellt.

Erfindungsgemäß umfasst das Zaunfeld wenigstens eine Blechtafel, bevorzugt jedoch eine Mehrzahl von vertikal übereinander angeordneten, blickdicht gegeneinander abschließenden Blechtafeln, die selbstragend in die Pfosten formschlüssig eingehängt und mittels eines elektrischen Potenzialausgleichs an den Pfosten elektrisch leitend angeschlossen sind.

Durch die erfindungsgemäße Lösung wird ein blickdichtes Zaunfeld erreicht, das einen sicheren Blendschutz, beispielsweise zur Abschirmung eines Schweißbereichs, herstellt. Durch das Einhängen einzelner Blechtafeln in die Pfosten und Herstellung eines elektrischen Potenzialausgleichs durch den elektrisch leitenden Anschluss der Blechtafeln an den Pfosten, ist die Montage vereinfacht und der gewünschte Potenzialausgleich wird zuverlässig erreicht.

Beim Einhängen der Blechtafeln in die Pfosten, kann ein Formschluss mit Spiel hergestellt werden, sodass das Einhängen vereinfacht wird. Das Einhängen kann einer Vormontage der Blechtafeln an den Pfosten dienen, gefolgt von einem Verschrauben als Endmontage.

Bei mehreren übereinander angeordneten Blechtafeln liegen die Blechtafeln zur Herstellung eines blickdichten Maschinenschutzzauns bevorzugt flächig aneinander und an den zwischengeordneten Pfosten an, sodass vom unteren Ende der untersten Blechtafel bis zum oberen Ende der obersten Blechtafel in der Horizontalrichtung von einem zum nächsten benachbart angeordneten Pfosten eine ununterbrochene blickdichte Fläche erreicht wird. Vorteilhaft überlappen übereinander angeordnete Blechtafeln sich miteinander und mit den Pfosten.

Bevorzugt sind die Blechtafeln aus gekantetem Blech hergestellt und weisen jeweils wenigstens eine obere Umkantung zur Herstellung eines U-Profils auf. Mit diesem U-Profil beziehungsweise mit der das U-Profil bildenden Umkantung ist die Blechtafel in Aussparungen in den Pfosten formschlüssig eingehängt, bevorzugt in der Dickenrichtung mit Spiel und in der Längsrichtung (horizontal) verschiebbar, bevor eine Endmontage erfolgt ist.

Besonders bevorzugt weisen die Blechtafeln zudem wenigstens eine untere Umkantung zur Herstellung eines Z-Profils auf, welches im montierten Zustand der Blechtafeln das U-Profil der oberen Umkantung einer darunter angeordneten Blechtafel umgreift. Damit wird ein besonders günstiger blickdichter Anschluss der vertikal übereinander angeordneten Blechtafeln erreicht, wobei die Umkantungen zugleich, wie nachfolgend noch erläutert wird, auch zur Herstellung eines Potenzialausgleichs zwischen der oberen und der unteren Blechtafel verwendet werden kann und/oder zur Herstellung eines Potenzialausgleichs zwischen der Blechtafel bzw. den Blechtafeln und dem Pfosten verwendet werden kann. Zugleich kann diese elektrische Kontaktierung der Blechtafeln untereinander beziehungsweise mit den Pfosten verdeckt erfolgen, sodass sie bei einer Draufsicht von vorne auf die Blechtafeln nicht sichtbar ist und zudem gut geschützt ist.

Beim Umgreifen des U-Profils der oberen Umkantung mit dem Z-Profil der unteren Umkantung liegen die horizontalen Schenkel der Umkantungen und die freien vertikalen Schenkel der Umkantungen, das heißt die freien Endabschnitte der Umkantungen, bevorzugt flächig aneinander an. Somit kann das Umgreifen auch als Übergreifen bezeichnet werden.

Bevorzugt erstreckt sich die obere Umkantung und/oder die untere Umkantung in der Horizontalrichtung über der gesamten Länge der Blechtafel. Dadurch ist es besonders leicht möglich, die Blechtafel vor Ort bei Bedarf zu kürzen, ohne dass die Befestigungsmöglichkeit an den Pfosten und aneinander eingeschränkt wird. Ferner wird ein sattes Aneinanderliegen einer oberen und einer unteren Blechtafel erreicht.

Günstig ist, wenn die Aussparungen in einer seitlichen, dem Zwischenraum zwischen zwei Pfosten zugewandten Fläche der Pfosten vorgesehen sind, wobei sich die Aussparungen dann auch bis auf eine Vorderseite der Pfosten erstrecken können. Damit wird eine besonders große Längentoleranz bei der Montage der Blechtafeln an den Pfosten erreicht, und, wenn sich die Aussparungen bis auf eine Vorderseite der Pfosten erstrecken, können die Blechtafeln innerhalb einer Toleranz seitlich verschiebbar von vorne auf den Pfosten aufliegend (vor)montiert werden.

Zwei übereinander angeordnete Blechtafeln können in dem Bereich, in welchem die untere Umkantung die obere Umkantung umschließt, zur Herstellung des Potenzialausgleichs elektrisch miteinander verbunden, insbesondere verschraubt, werden, beispielsweise an ihren horizontalen Schenkeln der Umkantungen.

Günstig ist es, wenn die Pfosten flächig an jeweils wenigstens einer Blechtafel anliegende Laschen, insbesondere biegbare Laschen, aufweisen, die zur Herstellung des Potenzialausgleichs jeweils elektrisch leitend mit der Blechtafel verbunden, insbesondere verschraubt, sind. Beispielsweise können die Laschen im Bereich der Aussparungen positioniert sein und bevorzugt jeweils mit der unteren Umkantung der Blechtafel elektrisch leitend verbunden, insbesondere verschraubt, sein. Hierfür weist der vertikal angeordnete Schenkel der unteren Umkantung, der das freie Ende des Z-Profils ausbildet, bevorzugt eine größere Länge als der vertikal angeordnete freie Schenkel des U-Profils der oberen Umkantung auf, sodass, wenn beispielsweise eine Gewindeschraube zur Verschraubung verwendet wird, diese allein in die untere Umkantung eingeschraubt wird, nicht hingegen in die obere Umkantung. Dadurch wird ein Auseinanderdrücken der aufeinander liegenden Umkantungen beim Verschrauben vermieden.

Die Laschen können zum Beispiel in der seitlichen Fläche der Pfosten in Blickrichtung auf die Blechtafel hinter der Aussparung am Pfosten angeschlossen sein. Sie können beispielsweise bei der Montage der Blechtafel, oder vorher, am Pfosten nach innen oder bei Pfosten mit über dem Umfang geschlossenen Profil bevorzugt nach außen umgebogen werden, um die geeignete Ausrichtung zur unteren Umkantung der Blechtafel einzunehmen.

Die Blechtafeln liegen bevorzugt mit ihren seitlichen Enden flächig von vorne auf den Pfosten auf, in Blickrichtung auf die Blechtafeln gesehen. Dadurch wird der Maschinenschutzzaun sicher blickdicht. Wie dargelegt erstrecken sich in diesem Fall die Aussparungen bevorzugt von den seitlichen, dem Zwischenraum zwischen zwei Pfosten zugewandten Flächen der Pfosten bis auf die Vorderseite der Pfosten. Die seitlichen den Blechtafeln zugewandte Flächen der Pfosten sind jene Flächen der Pfosten, die den Zwischenraum zwischen zwei benachbart zueinander angeordnete Pfosten gemeinsam begrenzen, also auch einander zugewandt sind.

Bevorzugt ist wenigstens eine vertikale Klemmleiste von vorne an den Pfosten montiert, welche einen horizontalen Abstand zwischen zwei horizontal zueinander beabstandeten Blechtafeln überbrückt und von vorne auf den Blechtafeln aufliegt, insbesondere federnd aufliegt. Dadurch werden die Blechtafeln sicher an den Pfosten verklemmt. Wenn die Klemmleiste am Pfosten verschraubt wird, kann das Einhängen der Blechtafeln an den Pfosten als Vormontage und das Verschrauben als Endmontage der Blechtafeln an dem Pfosten angesehen werden.

Die Pfosten können als über dem Umfang geschlossenes Hohlprofil ausgeführt werden, jedoch auch als offenes Profil. Zudem ist auch eine Ausführung als Vollprofil prinzipiell möglich.

Zur Verschraubung der Blechtafeln aneinander oder an den Pfosten können Schrauben mit Kratzelementen oder elektrischen Kontaktscheiben verwendet werden, die jeweils Vorsprünge aufweisen, die sich beim Anziehen der Schrauben in das Material der Blechtafeln eindrücken, insbesondere durch eine Beschichtung der Blechtafeln, beispielsweise eine Zinkschicht, hindurch. Der Potenzialausgleich kann dadurch ohne Kabel zwischen den Blechtafeln und den Pfosten auskommen und allein über die Kontaktierung beispielsweise mit Schrauben und/oder Kontaktscheiben erreicht werden.

Die Klemmleisten können bevorzugt an den Pfosten verschraubt werden und dabei zum Beispiel elastisch verformt werden, um die Blechtafeln gegen die Pfosten zu drücken. Auch die Herstellung eines Potenzialausgleichs zwischen den Klemmleisten und den Pfosten und/oder den Blechtafeln ist möglich.

Der erfindungsgemäße Maschinenschutzzaun zeichnet sich durch eine sehr große Flexibilität aus. So kann eine geeignete Anzahl von Blechtafeln übereinander an Pfosten, insbesondere mit einer entsprechenden Anzahl von Aussparungen, montiert werden. Die Montage ermöglicht, beispielsweise in Kombination mit der oder den Klemmleisten, einen leichten Längentoleranzausgleich. Auch das Kürzen der Blechtafeln ist bauseits mit herkömmlichen Werkzeugen leicht möglich.

Das Einhängen der Blechtafeln in die Pfosten stellt eine vorläufige Sicherung gegen Herausfallen her, sodass eine Montage durch eine Person leicht möglich ist. Die spezielle Gestaltung der Montage der Blechtafeln an den Pfosten ermöglicht eine enorme Zeitersparnis.

Bevorzugt sind auch die Pfosten aus Metall hergestellt und können beispielsweise auf dem Boden verschraubt werden.

Durch die erfindungsgemäße Montage der Blechtafel kann ein vergleichsweise dichter Bodenabschluss erreicht werden. Insbesondere kann ein Zusatzelement, insbesondere eine Zusatzblechtafel, am unteren Ende der Pfosten montiert werden, die in ihrer Form auch abweichend von den darüber angeordneten Blechtafeln sein kann. Beispielsweise weist diese Zusatzblechtafel nur die obere Umkantung auf und/oder ist weniger hoch als die darüber angeordnete Blechtafel.

Die Erfindung soll nachfolgend anhand eines Ausführungsbeispiels und den Figuren exemplarisch erläutert werden.

Es zeigen:
- Figur 1: ein Ausführungsbeispiel eines erfindungsgemäßen Maschinenschutzzauns mit zwei Pfosten und fünf Blechtafeln;
- Figur 2: den Maschinenschutzzaun aus der Figur 1 in einer Explosionsdarstellung;
- Figur 3: eine Blechtafel des Maschinenschutzzauns aus den Figuren 1 und 2;
- Figur 4: einen Pfosten des Maschinenschutzzauns aus den Figuren 1 und 2;
- Figur 5: den Potenzialausgleich zwischen zwei Blechtafeln;
- Figur 6: den Potenzialausgleich zwischen zwei Blechtafeln und einer Blechtafel und dem Pfosten;
- Figur 7: eine horizontale Schnittansicht durch den Maschinenschutzzaun im Bereich eines Pfostens.

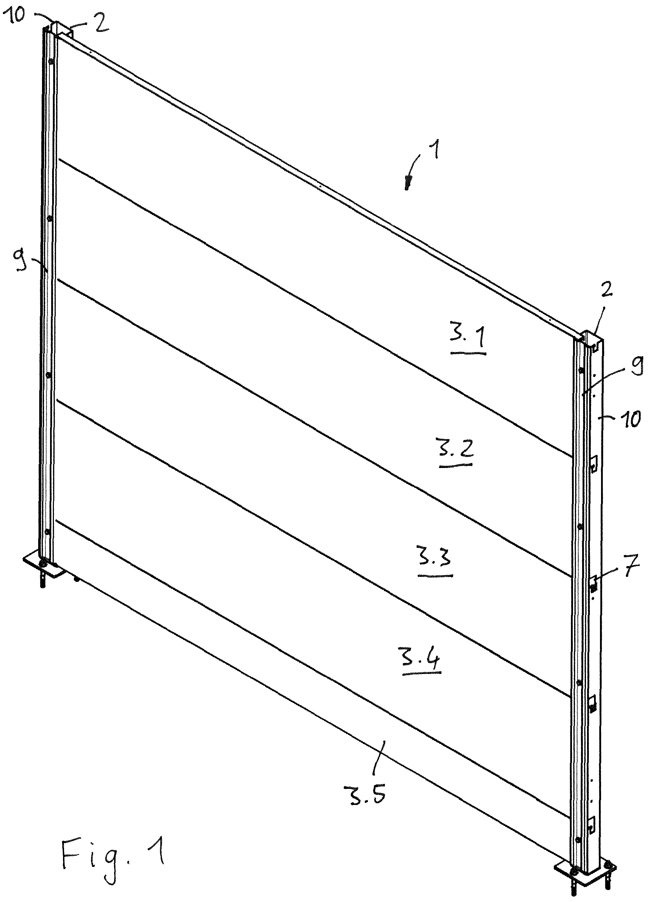

Figur 1 zeigt ein Ausführungsbeispiel eines erfindungsgemäßen Maschinenschutzzauns mit einem Zaunfeld 1 zwischen zwei Pfosten 2 in einer isometrischen Ansicht. Die Details des Ausführungsbeispiels sind vorteilhaft, jedoch nicht zwingend.

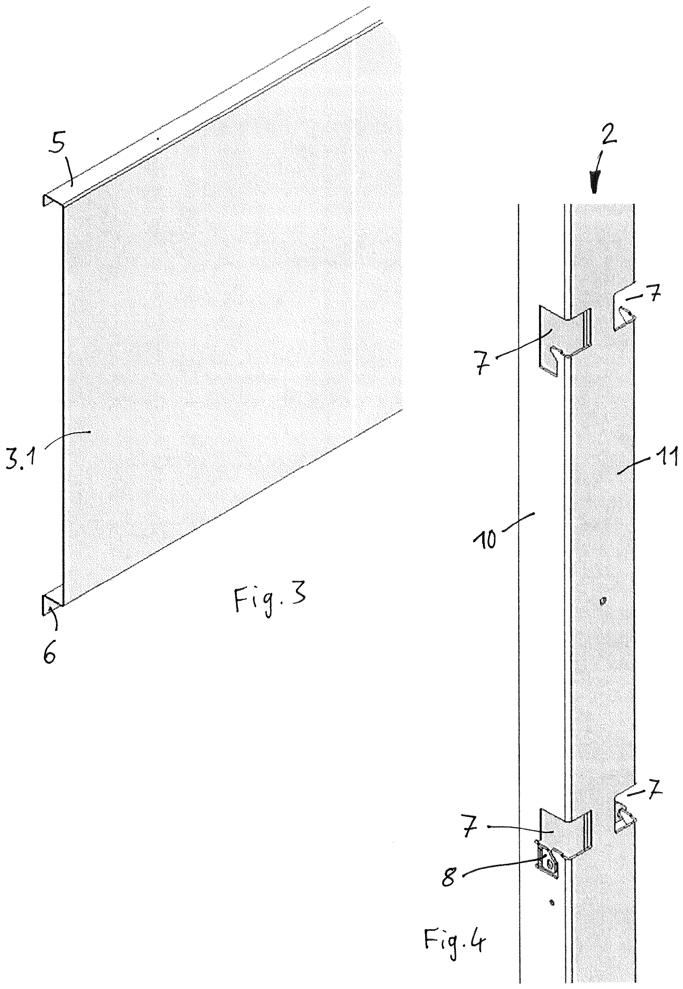

So sind im gezeigten Ausführungsbeispiel die Pfosten 2 als Hohlprofil ausgeführt mit Aussparungen 7, die sich von den beiden Seitenflächen 10 bis auf die Vorderseite 11 der Pfosten 2 erstrecken. Dies ist besonders gut aus der Explosionsdarstellung des Maschinenschutzzauns in der Figur 3 und aus der Detaildarstellung des Pfostens 2 in der Figur 4 ersichtlich.

Das Zaunfeld 1 ist aus einzelnen Blechtafeln 3.1 bis 3.5 zusammengesetzt, wobei die Anzahl der Blechtafeln 3.1 bis 3.5 nicht beschränkt ist. Beispielsweise könnte auch nur eine einzige Blechtafel zwischen zwei Pfosten 2 angeordnet sein, oder eine andere Anzahl als hier dargestellt.

Die Blechtafeln 3.1-3.4 weisen, wie besonders aus der Figur 3 und den Figuren 5 und 6 ersichtlich ist, jeweils eine obere Umkantung 5 und eine untere Umkantung 6 auf. Der vertikale Abstand zwischen den Umkantungen 5, 6 entspricht dem vertikalen Abstand zwischen den Aussparungen 7. Die obere Umkantung 5 der obersten Blechtafel 3.1 wird in die obersten Aussparungen 7 in den Pfosten 2 eingehängt. Die untere Umkantung 6 der obersten Blechtafel 3.1 wird zusammen mit der oberen Umkantung 5 der zweitobersten Blechtafel 3.2 in die zweitobersten Aussparungen 7 der Pfosten 2 eingehängt. Entsprechend werden die sich darunter anschließenden Blechtafeln 3.2 bis 3.4 in die von oben folgenden Aussparungen 7 der Pfosten 2 eingehängt.

Die untere Blechtafel 3.5 ist als Bodenabschluss abweichend von den darüber angeordneten Blechtafeln 3.1 bis 3.4 gestaltet, weil für diese jeweils zum Einhängen nur eine, nämlich die unterste Aussparung 7 in den Pfosten 2 zur Verfügung steht. So weist die untere Blechtafel 3.5 beispielsweise keine untere Umkantung 6 auf und auch die obere Umkantung 5 kann identisch oder anders gestaltet sein als die oberen Umkantungen 5 der Blechtafeln 3.1 bis 3.4.

Die oberen und unteren Umkantungen 5, 6 dienen nicht nur dem formschlüssigen Einhängen der Blechtafeln 3.1 bis 3.4 in die Pfosten 2, sondern bilden eine blickdichte Überlappung der Blechtafeln 3.1 bis 3.5 aneinander. So umgreift beziehungsweise übergreift das Z-Profil einer unteren Umkantung 6 einer jeweils oberen Blechtafel 3.1-3.4 das U-Profil der oberen Umkantung 5 der jeweils unteren Blechtafel 3.1-3.5. Die horizontalen Abschnitte und vertikalen Abschnitte der Umkantungen 5,6 liegen flächig aneinander an.

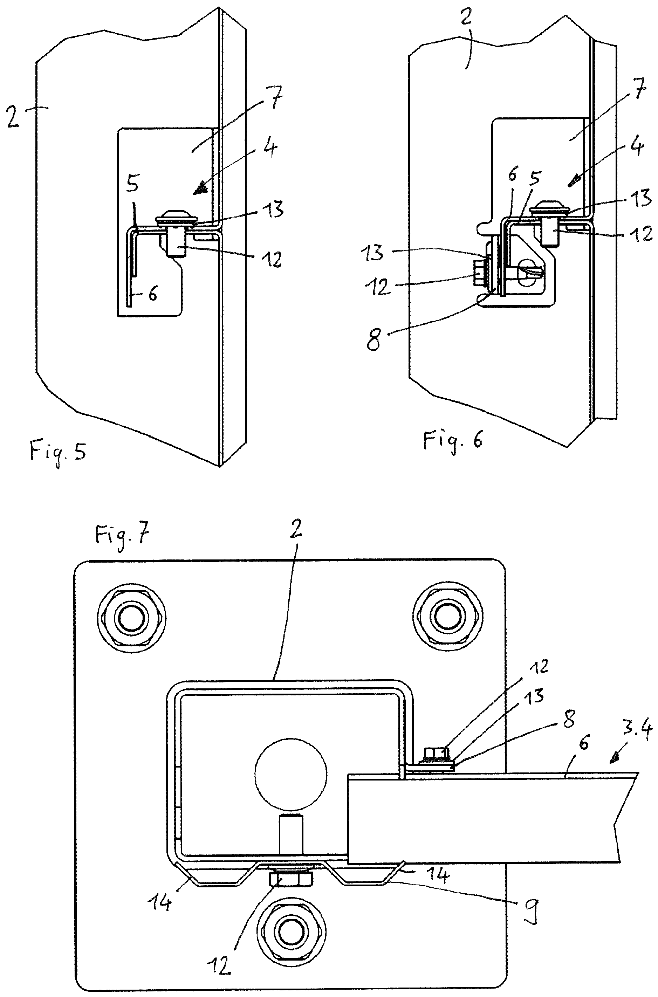

Wie man aus den Figuren 5 und 6 erkennen kann, ist jeweils eine untere Umkantung 6 im Bereich ihres horizontalen Abschnitts mit der umgriffenen oberen Umkantung 5 im Bereich von deren horizontalem Abschnitt verschraubt, um einen Potenzialausgleich 4 zwischen den Blechtafeln 3.1-3.5 herzustellen. Im gezeigten Ausführungsbeispiel ist hierfür wenigstens eine Schraube 12, bevorzugt sind mehrere Schrauben 12, durch die Umkantungen 5, 6 gesteckt und in eine der beiden Umkantungen 5, 6, beispielsweise die obere Umkantung 5, eingeschraubt. Die Schrauben 12 können beispielsweise als selbstschneidende Schrauben ausgeführt sein. Alternativ kann auch eine Mutter als Konterelement vorgesehen sein.

Die Schrauben 12, gegebenenfalls in Zusammenarbeit mit einer Kontaktscheibe 13, stellen eine elektrisch leitende Verbindung zwischen der oberen Umkantung 5 und der untere Umkantung 6 her.

Ein Potenzialausgleich 4 zwischen den Blechtafeln 3.1-3.5 und den Pfosten 2 wird über in den Pfosten 2 im Bereich einer Aussparung 7 vorgesehene Laschen 8 erreicht. Diese können teilweise aus dem Pfostenmaterial ausgestanzt oder ausgeschnitten sein, beispielsweise mit Laser, und am Pfosten 2 umgebogen werden. Gegebenenfalls ist hierfür eine Querschnittsschwächung im Bereich der Biegekante vorgesehen, siehe die Figur 4.

Die Laschen 8 können nach innen in den Pfosten 2 hinein oder bevorzugt nach außen aus diesem heraus gebogen werden, wodurch die Verschraubung der Laschen 8 mit einer Blechtafel 3.1-3.5, hier beispielsweise der Blechtafel 3.4, erleichtert wird. Auch hier erfolgt durch die Verschraubung mit der Schraube 12 und gegebenenfalls der Kontaktscheibe 13 der elektrische Potenzialausgleich, nämlich zwischen dem Pfosten 2 und der Blechtafel 3.4. Durch die Verschraubung der Blechtafeln 3.1-3.5 aneinander wird damit ein Potenzialausgleich 4 für alle Blechtafeln 3.1-3.5 gegenüber dem Pfosten 2 geschaffen.

Der vertikale freie Schenkel des Z-Profils der unteren Umkantungen 6 ist länger als der vertikale freie Schenkel des U-Profils der oberen Umkantungen 5 und steht somit, wie aus den Figuren 5 und 6 ersichtlich ist, im aneinander montierten Zustand der Blechtafeln 3.1-3.5 vertikal nach unten über die umschlossene obere Umkantung 5 hinaus. Dadurch ist es möglich, die Schraube 12 des Potenzialausgleichs 4 zwischen der Blechtafel 3.4 und den Pfosten 2 nur in den Schenkel der unteren Umkantung 6 einzubringen, insbesondere wiederum mittels einer selbstschneidenden Gewindeschraube.

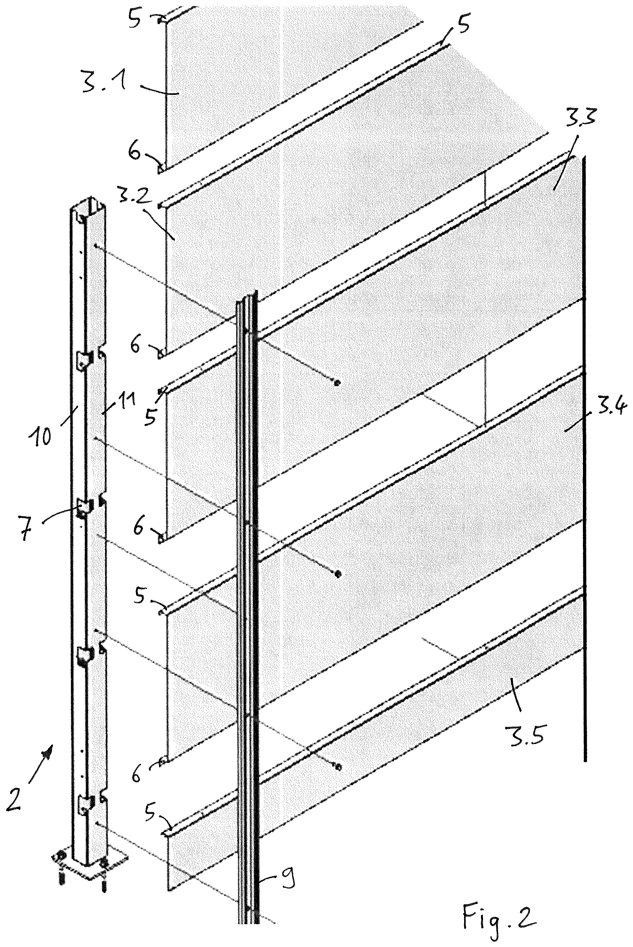

Wie man aus den Figuren 1, 2 und 7 erkennen kann, sind die Pfosten 2 bevorzugt am Boden verschraubt. Dies ist jedoch nicht zwingend.

Sowohl die Pfosten 2 als auch die Blechtafeln 3.1 bis 3.5 sowie die Schrauben 12 und gegebenenfalls die Kontaktscheiben 13 bestehen aus einem elektrisch leitenden Material.

Aus den Figuren 1, 2 und 7 ist ferner ersichtlich, dass die Blechtafeln 3.1 bis 3.5 mit sich vertikal entlang der Pfosten 2 erstreckenden Klemmleisten 9 an den Pfosten 2 fixiert sind. Die Klemmleisten 9 sind mit Schrauben 12 an den Pfosten 2 verschraubt und weisen Schenkel 14 auf, die mit Untermaß auf den Blechtafeln 3.1-3.5, insbesondere federnd, aufliegen.

### Bezugszeichenliste

- 1: Zaunfeld
- 2: Pfosten
- 3.1-3.5: Blechtafel
- 4: Potenzialausgleich
- 5: obere Umkantung
- 6: untere Umkantung
- 7: Aussparung
- 8: Lasche
- 9: Klemmleiste
- 10: Seitenfläche
- 11: Vorderseite
- 12: Schraube
- 13: Kontaktscheibe
- 14: Schenkel

## Patentansprüche

1. Maschinenschutzzaun mit wenigstens einem Zaunfeld (1) und wenigstens zwei das wenigstens eine Zaunfeld (1) tragenden Pfosten (2), wobei das Zaunfeld (1) aus Blech hergestellt ist;
**dadurch gekennzeichnet, dass**
das Zaunfeld (1) wenigstens eine Blechtafel (3.1-3.5) oder eine Mehrzahl von vertikal übereinander angeordneten, blickdicht gegeneinander abschließenden Blechtafeln (3.1-3.5) umfasst, die selbsttragend in die Pfosten (2) formschlüssig eingehängt und mittels eines elektrischen Potenzialausgleichs (4) an diesen elektrisch leitend angeschlossen sind.

2. Maschinenschutzzaun gemäß Anspruch 1, **dadurch gekennzeichnet, dass** die wenigstens eine Blechtafeln (3.1-3.5) aus gekantetem Blech hergestellt ist, jeweils mit wenigstens einer oberen Umkantung (5) zur Herstellung eines U-Profils, mit welchem die Blechtafel (3.1-3.5) in Aussparungen (7) in den Pfosten (2) formschlüssig eingehängt ist.

3. Maschinenschutzzaun gemäß Anspruch 2, **dadurch gekennzeichnet, dass** das Zaunfeld (1) eine Mehrzahl von vertikal übereinander angeordneten, blickdicht gegeneinander abschließenden Blechtafeln (3.1-3.5) umfasst und die Blechtafeln (3.1-3.5) jeweils wenigstens eine untere Umkantung (6) zur Herstellung eines Z-Profils umfassen, welches im montierten Zustand der Blechtafel (3.1-3.5) das U-Profil der oberen Umkantung (5) einer darunter angeordneten Blechtafel (3.1-3.5) umgreift.

4. Maschinenschutzzaun gemäß einem der Ansprüche 2 oder 3, **dadurch gekennzeichnet, dass** sich die obere Umkantung (5) und/oder die untere Umkantung (6) über der gesamten Länge der Blechtafel (3.1-3.5) erstreckt.

5. Maschinenschutzzaun gemäß einem der Ansprüche 2 bis 4, **dadurch gekennzeichnet, dass** die Aussparungen (7) in einer seitlichen, einem Zwischenraum zwischen den Pfosten (2) zugewandten Fläche der Pfosten (2) vorgesehen sind und sich insbesondere bis auf eine Vorderseite der Pfosten (2) erstrecken.

6. Maschinenschutzzaun gemäß den Ansprüche 2 und 3 und insbesondere einem der Ansprüche 4 oder 5, **dadurch gekennzeichnet, dass** zwei übereinander angeordnete Blechtafeln (3.1-3.5) in dem Bereich, in welchem die untere Umkantung (6) die obere Umkantung (5) umschließt, zur Herstellung des Potenzialausgleichs (4) elektrisch leitend miteinander verbunden, insbesondere verschraubt, sind.

7. Maschinenschutzzaun gemäß einem der Ansprüche 1 bis 6, **dadurch gekennzeichnet, dass** die Pfosten (2) flächig an jeweils wenigstens einer Blechtafel (3.1-3.5) anliegende Laschen (8), insbesondere biegbaren Laschen (8), aufweisen, die zur Herstellung des Potenzialausgleichs (4) jeweils elektrisch leitend mit der Blechtafel (3.1-3.5) verbunden, insbesondere verschraubt, sind.

8. Maschinenschutzzaun gemäß einem der Ansprüche 2 bis 6 und gemäß Anspruch 7, **dadurch gekennzeichnet, dass** die Laschen (8) im Bereich der Aussparungen (7) positioniert sind.

9. Maschinenschutzzaun gemäß den Ansprüchen 5 und 8, **dadurch gekennzeichnet, dass** die Laschen (8) in der seitlichen Fläche der Pfosten (2) in Blickrichtung auf die Blechtafel (3.1-3.5) hinter der Aussparung (7) am Pfosten (2) angeschlossen sind.

10. Maschinenschutzzaun gemäß Anspruch 8 oder 9, **dadurch gekennzeichnet, dass** die Laschen (8) jeweils mit der unteren Umkantung (6), insbesondere ausschließlich mit der unteren Umkantung (6), der Blechtafel (3.1-3.5) elektrisch leitend verbunden, insbesondere verschraubt, sind.

11. Maschinenschutzzaun gemäß einem der Ansprüche 1 bis 10, **dadurch gekennzeichnet, dass** die wenigstens eine Blechtafeln (3.1-3.5) mit ihren seitlichen Enden flächig in Blickrichtung auf die Blechtafel von vorne auf den Pfosten (2) aufliegt.

12. Maschinenschutzzaun gemäß Anspruch 11, **dadurch gekennzeichnet, dass** wenigstens eine vertikale Klemmleiste (9) von vorne an den Pfosten (2) montiert, insbesondere verschraubt, ist, welche einen horizontalen Abstand zwischen zwei horizontal zueinander beabstandeten Blechtafeln (3.1-3.5) überbrückt und von vorne auf den Blechtafeln (3.1-3.5), insbesondere federnd, aufliegt.

## Claims

1. Machine safety fence having at least one fence panel (1) and at least two posts (2) supporting the at least one fence panel (1), wherein the fence panel (1) is made of sheet metal;
**characterized in that**
the fence panel (1) comprises at least one sheet metal panel (3.1-3.5) or a plurality of sheet metal panels (3.1-3.5) which are arranged vertically one above the other, are close against each other in an opaque manner, are self-supportingly suspended in a form-fitting manner in the posts (2) and are electrically conductively connected thereto by means of equipotential bonding (4).

2. Machine safety fence according to claim 1, **characterized in that** the at least one sheet metal panel (3.1-3.5) is made of folded sheet metal, in each case having at least one upper folded edge (5) for producing a U-profile, with which the sheet metal panel (3.1-3.5) is suspended in a form-fitting manner in recesses (7) in the posts (2).

3. Machine safety fence according to claim 2, **characterized in that** the fence panel (1) comprises a plurality of sheet metal panels (3.1-3.5) arranged vertically one above the other and closing against each other in an opaque manner, and the sheet metal panels (3.1-3.5) each comprise at least one lower folded edge (6) for producing a Z-profile which, in the assembled state of the sheet metal panel (3.1-3.5), embraces the U-profile of the upper folded edge (5) of a sheet metal panel (3.1-3.5) arranged below it.

4. Machine safety fence according to one of claims 2 or 3, **characterized in that** the upper folded edge (5) and/or the lower folded edge (6) extends over the entire length of the sheet metal panel (3.1-3.5).

5. Machine safety fence according to one of claims 2 to 4, **characterized in that** the recesses (7) are provided in a lateral surface of the posts (2) facing an intermediate space between the posts (2) and extend in particular as far as a front side of the posts (2).

6. Machine safety fence according to claims 2 and 3 and in particular one of claims 4 or 5, **characterized in that** two sheet metal panels (3.1-3.5) arranged one above the other are electrically conductively connected, in particular screwed, to each other in the region in which the lower folded edge (6) encloses the upper folded edge (5) in order to produce the equipotential bonding (4).

7. Machine safety fence according to one of claims 1 to 6, **characterized in that** the posts (2) each have tabs (8), in particular bendable tabs (8), which rest flat against at least one sheet metal panel (3.1-3.5) and are each electrically conductively connected, in particular screwed, to the sheet metal panel (3.1-3.5) in order to produce the equipotential bonding (4).

8. Machine safety fence according to one of claims 2 to 6 and according to claim 7, **characterized in that** the tabs (8) are positioned in the region of the recesses (7).

9. Machine safety fence according to claims 5 and 8, **characterized in that** the tabs (8) are connected in the lateral surface of the posts (2) in the direction of view of the sheet metal panel (3.1-3.5) behind the recess (7) on the post (2).

10. Machine safety fence according to claim 8 or 9, **characterized in that** the tabs (8) are each electrically conductively connected, in particular screwed, to the lower folded edge (6), in particular exclusively to the lower folded edge (6), of the sheet metal panel (3.1-3.5).

11. Machine safety fence according to one of claims 1 to 10, **characterized in that** the at least one sheet metal panel (3.1-3.5) rests with its lateral ends flat on the posts (2) in the direction of view of the sheet metal panel from the front.

12. Machine safety fence according to claim 11, **characterized in that** at least one vertical clamping strip (9) is mounted, in particular screwed, to the posts (2) from the front, which strip bridges a horizontal distance between two horizontally spaced sheet metal panels (3.1-3.5) and rests on the sheet metal panels (3.1-3.5), in particular resiliently, from the front.

## Revendications

1. Clôture de protection pour machine comprenant au moins un panneau de clôture (1) et au moins deux poteaux (2) portant l'au moins un panneau de clôture (1), le panneau de clôture (1) étant fabriqué en tôle ;
**caractérisée en ce que**
le panneau de clôture (1) comprend au moins une plaque en tôle (3.1-3.5) ou une pluralité de plaques en tôle (3.1-3.5) disposées verticalement les unes au-dessus des autres et se terminant de manière opaque les unes contre les autres et qui sont accrochées de manière autoportante par complémentarité de forme dans les poteaux (2) et reliées de manière électriquement conductrice à ceux-ci à l'aide d'une liaison équipotentielle électrique (4).

2. Clôture de protection pour machine selon la revendication 1, **caractérisée en ce que** l'au moins une plaque en tôle (3.1-3.5) est fabriquée en tôle pliée, à chaque fois avec au moins un rebord supérieur (5) pour fabriquer un profilé en U avec lequel la plaque en tôle (3.1-3.5) est accrochée par complémentarité de forme dans des évidements (7) dans les poteaux (2).

3. Clôture de protection pour machine selon la revendication 2, **caractérisée en ce que** le panneau de clôture (1) comprend une pluralité de plaques en tôle (3.1-3.5) disposées verticalement les unes au-dessus des autres et se terminant de manière opaque les unes contre les autres, et les plaques en tôle (3.1-3.5) comprennent à chaque fois au moins un rebord inférieur (6) pour fabriquer un profilé en Z qui, à l'état assemblé de la plaque en tôle (3.1-3.5), englobe le profilé en U du rebord supérieur (5) d'une plaque en tôle (3.1-3.5) disposée en-dessous.

4. Clôture de protection pour machine selon l'une des revendications 2 ou 3, **caractérisée en ce que** le rebord supérieur (5) et/ou le rebord inférieur (6) s'étend(ent) sur toute la longueur de la plaque en tôle (3.1-3.5).

5. Clôture de protection pour machine selon l'une des revendications 2 à 4, **caractérisée en ce que** les évidements (7) sont prévus dans une surface latérale des poteaux (2) en regard d'un espace intermédiaire entre les poteaux (2) et s'étendent en particulier jusqu'à une face avant des poteaux (2).

6. Clôture de protection pour machine selon les revendications 2 et 3 et en particulier selon l'une des revendications 4 ou 5, **caractérisée en ce que** deux plaques en tôle (3.1-3.5) disposées l'une au-dessus de l'autre sont connectées, en particulier vissées, de manière électriquement conductrice dans la région où le rebord inférieur (6) jouxte le rebord supérieur (5) pour fabriquer la liaison équipotentielle (4).

7. Clôture de protection pour machine selon l'une des revendications 1 à 6, **caractérisée en ce que** les poteaux (2) présentent des languettes (8), en particulier des languettes pliables (8), qui sont ajustées de manière plane à chaque fois sur au moins une plaque en tôle (3.1-3.5) et qui sont connectées, en particulier vissées, de manière électriquement conductrice à chaque fois à la plaque en tôle (3.1-3.5) pour fabriquer la liaison équipotentielle (4).

8. Clôture de protection pour machine selon l'une des revendications 2 à 6 et selon la revendication 7, **caractérisée en ce que** les languettes (8) sont positionnées dans la région des évidements (7).

9. Clôture de protection pour machine selon les revendications 5 et 8, **caractérisée en ce que** les languettes (8) sont reliées sur le poteau (2) derrière l'évidement (7) dans la surface latérale des poteaux (2) quand on regarde dans la direction de la plaque en tôle (3.1-3.5).

10. Clôture de protection pour machine selon la revendication 8 ou 9, **caractérisée en ce que** les languettes (8) sont à chaque fois connectées, en particulier vissées, de manière électriquement conductrice au rebord inférieur (6), en particulier exclusivement au rebord inférieur (6), de la plaque en tôle (3.1-3.5).

11. Clôture de protection pour machine selon l'une des revendications 1 à 10, **caractérisée en ce que** l'au moins une plaque en tôle (3.1-3.5) repose avec leurs extrémités latérales sur le poteau (2) de manière plane quand on regarde dans la direction de la plaque en tôle depuis l'avant.

12. Clôture de protection pour machine selon la revendication 11, **caractérisée en ce qu'**au moins une bande de serrage verticale (9) est montée, en particulier vissée, sur le poteau (2) par l'avant, laquelle ponte une distance horizontale entre deux plaques en tôle (3.1-3.5) distantes horizontalement l'une de l'autre et repose par l'avant sur les plaques en tôle (3.1-3.5), en particulier de manière élastique.
